Europäisches Patentamt

European Patent Office

Office européen des brevets

(19)

(11) Veröffentlichungsnummer: **0 330 898**

**A1**

(12) # EUROPÄISCHE PATENTANMELDUNG

(21) Anmeldenummer: **89102460.6**

(22) Anmeldetag: **13.02.89**

(51) Int. Cl.⁴: **F16M 7/00 , H02K 7/10**

(30) Priorität: **26.02.88 DE 3806172**

(43) Veröffentlichungstag der Anmeldung:
**06.09.89 Patentblatt 89/36**

(84) Benannte Vertragsstaaten:
**AT BE CH DE ES FR GB IT LI NL SE**

(71) Anmelder: **Siemens Aktiengesellschaft**
**Wittelsbacherplatz 2**
**D-8000 München 2(DE)**

(72) Erfinder: **Breyer, Eberhard**
**St.-Bruno-Strasse 9**
**D-8740 Bad Neustadt/S(DE)**

(54) **Aus einem Elektromotor und einer über Riemen von diesem angetriebenen Arbeitsmaschine bestehendes Aggregat.**

(57) Die Erfindung betrifft ein aus einem Elektromotor und einer über Riemen von diesem angetriebenen Arbeitsmaschine bestehendes Aggregat, bei dem der Elektromotor (6) mit seiner Motorwelle (16) achsparallel zur Welle (17) der Arbeitsmaschine (1) an einer Fußplatte (7) befestigt ist, die zum Spannen des Riemens verschwenkbar an einer die Arbeitsmaschine (1) und den Elektromotor (6) verbindenden Konsole (4) angeordnet und mittels mindestens einer Stellschraube (20) verstellbar ist. Eine leichtere Einstellung der Parallelität von Motor- und Maschinenwelle sowie eine Geräuschunterdrückung ist dadurch möglich, daß ein einteiliges, zwei in einem Winkel aneinander stoßende Schenkel (9 und 10) aufweisendes, der Länge der Fußplatte (7) entsprechendes Zwischenteil (8) vorgesehen und mit den freien Enden (11 und 12) seiner beiden Schenkel (9 und 10) an der Konsole (4) befestigt ist, daß ferner die Fußplatte (7) im Bereich der Verbindungsstelle (18) der beiden Schenkel (9 und 10) mit dem sich in Richtung der Fußplatte (7) erstreckenden einen Schenkel (9) verbunden ist und die Längenerstreckung des anderen Schenkels (10) von der Verbindungsstelle (18) mit dem einen Schenkel (9) bis zu seiner Einspannstelle an der Konsole (4) so bemessen ist, daß im Hinblick auf die Stärke und die Streckgrenze seines Materials die erforderliche Schwenkbewegung der Fußplatte (7) ausführbar ist.

FIG 2

FIG 1

EP 0 330 898 A1

# Aus einem Elektromotor und einer über Riemen von diesem angetriebenen Arbeitsmaschine bestehendes Aggregat

Die Erfindung betrifft ein aus einem Elektromotor und einer über Riemen von diesem angetriebenen Arbeitsmaschine bestehendes Aggregat, bei dem der Elektromotor mit seiner Motorwelle achsparallel zur Welle der Antriebsmaschine an einer Fußplatte befestigt ist, die zum Spannen des Riemens verschwenkbar an einer die Arbeitsmaschine und den Elektromotor verbindenden Konsole angeordnet und mittels mindestens einer Stellschraube verstellbar ist.

Bei bekannten, auf dem Markt befindlichen Aggregaten dieser Art, sind an der den Elektromotor aufnehmenden Fußplatte und an der Konsole Lageraugen vorgesehen, die koaxial aufgebohrt und durch einen Lagerbolzen zu einem Gelenk zusammengefügt werden. Da Parallelität zwischen der Motorwelle und der Antriebswelle der Arbeitsmaschine erreicht werden muß, erfordert das Aufbohren der Lageraugen eine hohe Herstellungsgenauigkeit. Darüber hinaus muß das Passungsspiel zwischen den Bohrungen der Lageraugen und dem Lagerbolzen kleingehalten werden, um eine Geräuschbildung infolge drehfrequenter Maschinenschwingungen möglichst zu unterdrücken.

Der Erfindung liegt die Aufgabe zugrunde, ein Aggregat der eingangs beschriebenen Art so auszubilden, daß die Parallelität von Motor- und Maschinenwelle sowie eine Geräuschunterdrückung mittels einer konstruktiv wesentlich einfacheren Befestigung des Elektromotors erreichbar sind.

Die Lösung der gestellten Aufgabe gelingt nach der Erfindung dadurch, daß ein der Länge der Fußplatte angepaßtes, zwei unter einem Winkel miteinander verbundene Schenkel aufweisendes, einteiliges Zwischenteil vorgesehen und mit den freien Enden seiner beiden Schenkel an der Konsole befestigt ist, daß die Fußplatte im Bereich der Verbindungsstelle der beiden Schenkel mit dem einen sich in Richtung der Fußplatte erstreckenden Schenkel verbunden ist und ferner die Längenerstreckung des anderen Schenkels von der Verbindungsstelle mit dem einen Schenkel bis zu seiner Einspannstelle an der Konsole so bemessen ist, daß im Hinblick auf die Stärke und die Streckgrenze seines Materials die erforderliche Schwenkbewegung der Fußplatte ausführbar ist. Ein solches Zwischenteil läßt sich relativ einfach zu Erzielung der notwendigen Parallelität an der Konsole ausrichten. Durch die beschriebene Dimensionierung des anderen Schenkels und aufgrund der Elastizität seines Materiales ist eine Verschwenkung des Zwischenteiles in bestimmten Grenzen möglich, so daß die Lage des Elektromotors entsprechend veränderbar ist und die Riemenspannung dadurch reguliert werden kann. Da die beiden Schenkel fest verbunden sind, ergeben sich keinerlei Geräuschprobleme, wie sie bei üblichen Gelenkverbindungen vorhanden sind.

Eine Verbindung der beiden Schenkel unter einem spitzen Winkel trägt zu einer Erhöhung der Elastizität bei, so daß sich das Zwischenteil leichter verschwenken läßt.

Das Zwischenteil kann vorteilhafterweise aus einem einfachen Blech oder auch aus mehreren geschichtet angeordneten Blechen bestehen. Hierdurch ergibt sich auch die erforderliche Beweglichkeit an der Verbindungsstelle der beiden Schenkel, ohne daß diese Verbindungsstelle hierfür noch eigens ausgebildet werden muß.

Eine sehr stabile Befestigung des Zwischenteiles an der Konsole wird dadurch erreicht, daß die freien Enden der beiden Schenkel mittels durch Schrauben befestigbarer Deckleisten zwischen diesen und sich senkrecht oder annähernd senkrecht erstreckenden Wänden der Konsole eingepreßt sind. Die Befestigung der Schenkel an senkrechten Konsolenwänden erleichtert außerdem das Ausrichten der Motor- und Maschinenwelle auf Parallelität. Hierbei ist es noch vorteilhaft, daß die zum Durchstecken der Schrauben an den freien Enden der Schenkel vorgesehenen Befestigungslöcher einen größeren Durchmesser als die Schrauben aufweisen. Das Zwischenteil kann somit bei gelösten Schrauben entsprechend ausgerichtet und dann durch Anziehen der Schrauben durch Pressung an der Konsole gehalten werden.

Anhand eines in der Zeichnung dargestellten Ausführungsbeispieles wird der Anmeldungsgegenstand nachfolgend näher beschrieben. Es zeigt:

FIG 1 ein aus einem Verdichter und einem ELektromotor bestehendes Aggregat in Seitenansicht,

FIG 2 eine Stirnansicht der Motorseite des Aggregates mit teilweisem Schnitt entlang der Linie II-II in FIG 1.

Mit 1 ist ein Verdichter bezeichnet, über dessen Ein- und Auslaßstutzen 2 und 3 an seinem Gehäuse eine Konsole 4 angeflanscht ist. Diese Konsole 4 dient zur Aufnahme eines den Verdichter über einen Riemen 5 antreibenden Elektromotor 6. Zur Montage des Elektromotors 6 an der Konsole 4 ist eine Fußplatte 7 vorgesehen, die über ein Zwischenteil 8 verschwenkbar mit der Konsole 4 verbunden ist.

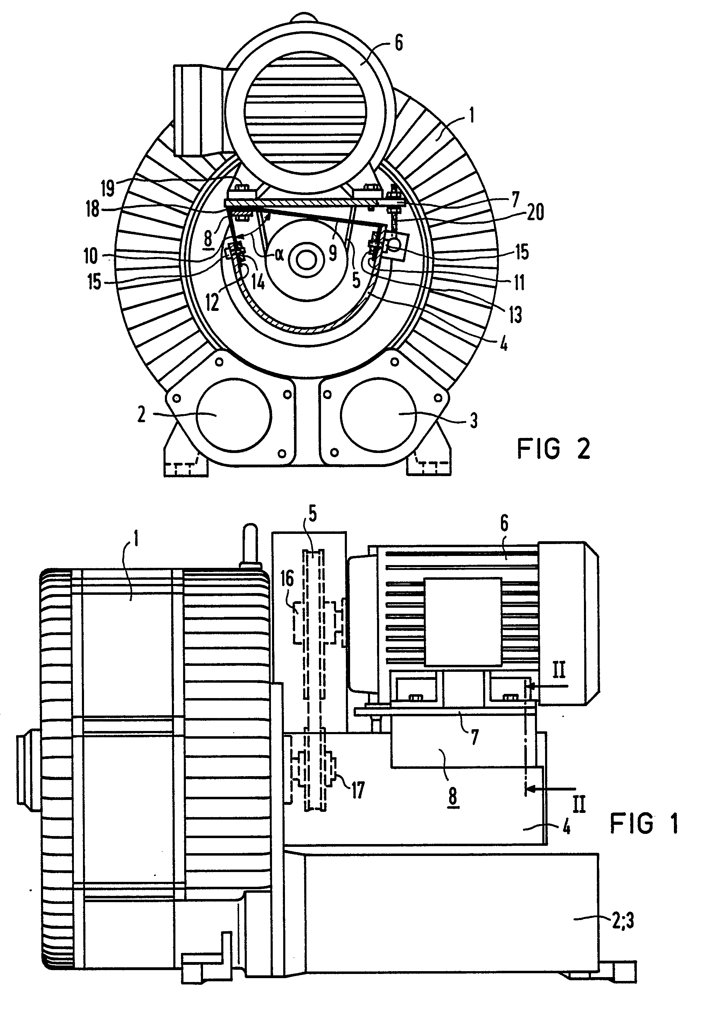

Aus der Darstellung in FIG 2 ist zu ersehen, daß das Zwischenteil 8 aus zwei in spitzem Winkel aneinander stoßenden Schenkeln 9 und 10 gebildet ist. Der eine Schenkel 9 erstreckt sich in der Richtung der Fußplatte 7 und ist mit seinem freien Ende 11, welches gegenüber dem eigentlichen Schenkel 9 nochmals abgekantet ist, auf der einen Seite an der sich nahezu senkrecht erstreckenden Wand der Konsole 4 befestigt. Desgleichen ist der andere Schenkel 10 mit seinem freien Ende 12 an der gegenüberliegenden Seite ebenfalls an der sich annähernd senkrecht erstreckenden Wand der Konsole 4 befestigt. Die Befestigung der freien Schenkelenden 11 und 12 erfolgt jeweils mittels einer Deckleiste 13 bzw. 14, die durch Schrauben 15 an den Wänden der Konsole 4 gehalten sind und zwischen denen und der betreffenden Konsolenwand das freie Ende 11 bzw. 12 des jeweiligen Schenkels 9 bzw. 10 eingeklemmt ist. Die an den freien Enden 11 und 12 zum Durchstecken der Schrauben 15 vorgesehenen Befestigungslöcher weisen einen größeren Durchmesser als die Schrauben 15 auf, so daß das Zwischenteil 8 entsprechend verstellt werden kann, um eine parallele Ausrichtung zwischen der Welle 16 des Elektromotors und der Antriebswelle 17 des Verdichters zu erreichen. Da die Schenkelenden 11 und 12 an senkrecht oder nahezu senkrecht verlaufenden Wänden der Konsole 4 befestigt sind, läßt sich in besonders einfacher Weise die zur Erzielung der Parallelität zwischen der Motor- und Maschinenwelle notwendige Höhenverstellung erreichen.

Um den oder die Riemen 5, die in der Regel Keilriemen sind, ohne Schwierigkeiten auf die mit den Wellen 16 und 17 verbundenen Riemenscheiben auflegen bzw. abnehmen zu können und daß außerdem die gewünschte Riemenspannung eingestellt werden kann, ist die auf ihrer einen Seite im Bereich der Verbindungsstelle 18 der beiden Schenkel 9 und 10 an dem einen Schenkel 9 mittels einer Schraubverbindung 19 befestigte Fußplatte 7 durch eine Stellschraube 20 verschwenkbar.

Die Länge des anderen Schenkels 10 hängt von der Materialstärke und von der Streckgrenze des verwendeten Materials zur Erzielung eines gewünschten Schwenkwinkels ab. Der eine Schenkel 9 wirkt als Querlenker und stabilisiert die Lage des Zwischenteiles 8.

Damit ergibt sich trotz der guten Einstellbarkeit des Zwischenteiles 8 eine sehr stabile Befestigung des Elektromotors 6 an der Konsole 4.

## Ansprüche

1. Aus einem Elektromotor und einer über Riemen von diesem angetriebenen Arbeitsmaschine bestehendes Aggregat, bei dem der Elektromotor mit seiner Motorwelle achsparallel zur Welle der Arbeitsmaschine an einer Fußplatte befestigt ist, die zum Spannen des Riemens verschwenkbar an einer die Arbeitsmaschine und den Elektromotor verbindenden Konsole angeordnet und mittels mindestens einer Stellschraube verstellbar ist, **dadurch gekennzeichnet,** daß ein der Länge der Fußplatte (7) angepaßtes, zwei unter einem Winkel miteinander verbundene Schenkel (9 und 10) aufweisendes, einteiliges Zwischenteil (8) vorgesehen und mit den freien Enden (11 und 12) seiner beiden Schenkel (9 und 10) an der Konsole (4) befestigt ist, daß die Fußplatte (7) im Bereich der Verbindungsstelle (18) der beiden Schenkel (9 und 10) mit dem einen sich in Richtung der Fußplatte (7) erstreckenden Schenkel (9) verbunden ist und ferner die Längenerstreckung des anderen Schenkels (10) von der Verbindungsstelle (18) mit dem einen Schenkel (9) bis zu seiner Einspannstelle an der Konsole (4) so bemessen ist, daß im Hinblick auf die Stärke und die Streckgrenze seines Materials die erforderliche Schwenkbewegung der Fußplatte ausführbar ist.

2. Aggregat nach Anspruch 1, **dadurch gekennzeichnet,** daß die beiden Schenkel (9 und 10) unter einem spitzen Winkel ($\alpha$) miteinander verbunden sind.

3. Aggregat nach Anspruch 1 oder 2, **dadurch gekennzeichnet,** daß das Zwischenteil (8) aus Blech besteht.

4. Aggregat nach Anspruch 3, **dadurch gekennzeichnet,** daß das Zwischenteil (8) aus mehreren geschichteten Blechen besteht.

5. Aggregat nach einem oder mehreren der vorhergehenden Ansprüche, **dadurch gekennzeichnet,** daß die freien Enden (11 und 12) der beiden Schenkel (9 und 10) mittels durch Schrauben (15) befestigbarer Deckleisten (13 und 14) zwischen diesen und sich senkrecht oder annähernd senkrecht erstreckenden Wänden der Konsole (4) eingepreßt sind.

6. Aggregat nach Anspruch 5, **dadurch gekennzeichnet,** daß die zum Durchstecken der Schrauben (15) an den freien Enden (11 und 12) der Schenkel (9 und 10) vorgesehenen Befestigungslöcher einen größeren Durchmesser als die Schrauben (15) aufweisen.

FIG 2

FIG 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-1 694 868 (SAWYER)<br>* Seite 1, Zeilen 50-78; Seite 2, Zeilen 4-36; Figuren 1,4 *<br>--- | 1,3 | F 16 M 7/00<br>H 02 K 7/10 |
| A | US-A-2 286 482 (FREED)<br>* Insgesamt *<br>--- | 1,3 | |
| A | FR-A-2 499 208 (NUOVA IB-MEI)<br>* Seite 4, Zeile 15 - Seite 5, Zeile 1 *<br>--- | 1,3 | |
| A | GB-A-1 067 347 (HITACHI)<br>--- | | |
| A | GB-A- 739 235 (THE PROSPERITY CO.)<br>----- | | |

**RECHERCHIERTE SACHGEBIETE (Int. Cl.4)**

F 16 M
H 02 K

Der vorliegende Recherchenbericht wurde für alle Patentansprüche erstellt

| Recherchenort | Abschlußdatum der Recherche | Prüfer |
|---|---|---|
| DEN HAAG | 06-06-1989 | BARON C. |